# EUROPÄISCHE PATENTSCHRIFT

(11) **EP 0 974 567 B1**
(45) Veröffentlichungstag und Bekanntmachung des Hinweises auf die Patenterteilung: **19.12.2007**
(21) Anmeldenummer: 99810627.2
(22) Anmeldetag: 13.07.1999
(51) Int. Cl.: C04B 40/06, C04B 28/02

(54) **Organisch-anorganischer Mörtel**
Organic-inorganic mortar
Mortier organo-mineral

(30) Priorität: 21.07.1998 DE 19832668
(43) Veröffentlichungstag der Anmeldung: 26.01.2000
(73) Patentinhaber: HILTI Aktiengesellschaft, 9494 Schaan (LI)
(72) Erfinder: Gienau, Roland, 87679 Westendorf (DE); Pfeil, Armin, 86916 Kaufering (DE)
(74) Vertreter: Wildi, Roland

(56) Entgegenhaltungen:
- EP-A- 0 207 473
- EP-A- 0 495 336
- EP-A- 0 589 831
- US-A- 4 548 270
- US-A- 5 322 562

## Beschreibung

Vorteile anorganischer Systeme, wie Wärmeform- und Temperaturbeständigkeit als auch die Injizierbarkeit des flüssig-pastösen Zustands gewahrt bleiben.

Gegenstand der Erfindung ist demgemäss eine härtbare 2-Komponenten-Mörtelmasse mit härtbaren organischen und härtbaren anorganischen Bestandteilen und mit Härtern, wobei die Härter von dem jeweiligen härtbaren Bestandteil reaktionsinhibierend getrennt, aber unter Anwendungsbedingungen damit zur Reaktion gebracht werden kann, bei der erfindungsgemäss Epoxid und feinteiliger Zement als härtbare Bestandteile und Amin und Alkaliwasserglas als Härter enthalten sind. Auch nach längerer Lagerung tritt die Härtung der erfindungsgemässen Mörtelmassen erst dann ein, wenn die härtbaren Bestandteile mit den Härtern z.B. durch Mischen miteinander zur Reaktion gebracht werden, beispielsweise dadurch, dass das Epoxid mit dem Aminhärter und der feinteilige Zement mit dem Alkaliwasserglas oder das Gemisch der härtbaren Bestandteile mit dem Gemisch der Härter zusammen zur Reaktion gebracht werden.

Die Epoxidverbindungen können aliphatisch, cycloaliphatisch, aromatisch oder heterocyclisch sein. Es handelt sich regelmässig um Polyepoxide mit mindestens 1,5 Epoxidgruppen im Molekül. Zu den bevorzugten Verbindungen gehören neben Polyglycidylestern insbesondere Polyglycidylether und hier vor allem die Polyglycidyletherderivate des Bisphenol-A, Bisphenol-F und der Novolake. Im Sinne der vorliegenden Erfindung brauchbare Epoxidverbindungen sind beispielsweise in "Handbook of Epoxy Resins", 1967, Lee and Neville beschrieben.

Es hat sich als vorteilhaft erwiesen, wenn die erfindungsgemässen Mörtel Reaktivverdünner für die Epoxide enthalten. Hierzu gehören vor allem die als Reaktiwerdünner bekannten niedermolekularen epoxifunktionellen Ether wie Hexandioldiglycidylether, Butylphenylglycidylether, Kresylphenylglycidylether, andere als Reaktivverdünner bekannte Ether von Glycidylalkoholen mit gegebenenfalls alkylsubstituierten mehrwertigen Phenolen, Polyacetoacetate wie Bis-, Tri- oder Tetraacetoacetaten von mehrwertigen Alkoholen oder Polymethoxyalkanen.

Als Zemente sind insbesondere Portlandzemente, Aluminatzemente bzw. Tonerdezemente und Hochofenzemente sowie deren Abmischungen geeignet. Dabei wirkt sich das Einbringen von Al-haltigen Verbindungen, die während der Reaktion Allonen zur Bildung von Erhärtungsprodukten zur Verfügung stellen, beispielsweise Aluminiumzement, u.a. vorteilhaft auf die Stabilität des erhärteten Produktes aus. Überraschenderweise hat sich gezeigt, dass die Zementteilchengrösse von merklichem Einfluss auf die mit den erfindungsgemässen Mörtelmassen erzielbaren Auszugswerte ist.

Auch die Härtungscharakteristik wird davon beeinflusst. Bewährt haben sich insbesondere feinteilige Zemente einer spezifischen Oberfläche von 0,8 bis 7, vor allem 3 bis 6 m²/g (BET). Dabei können die Eigenschaften durch Zumischung von Zementen kleinerer oder grösserer spezifischer Oberflächen zu den vorgenannten Zementen sowohl hinsichtlich der Auszugswerte als auch hinsichtlich der Härtungsgeschwindigkeit modifiziert werden.

Zur Härtung der Epoxide können aliphatische und/oder araliphatische Amine, vorzugsweise Alkylenpolyamine, enthalten sein. Besonders bevorzugt auch bei Temperaturen unterhalb Raumtemperatur und als Härter wirksame Amine sind Diethylentriamin und die homologen Polyethylenpolyamine, alicyclische Polyamine, Isophorondiamin und dessen Derivate. Sehr gut geeignet sind auch Mannichbasen, wie sie durch Kondensation von Aldehyd und Phenolen mit mehrere Aminogruppen aufweisenden Aminen erhalten werden. Vorzugsweise beträgt das Verhältnis der Zahl der Aminwasserstoffatome zur Zahl der Epoxigruppen 3 : 1 bis 0,8 : 1, wobei ein Überschuss, im Gegensatz zu einem wesentlichen stöchiometrischen Unterschuss, weniger schädlich ist. Die Härtung kann durch die üblichen Härtungskatalysatoren wie Triäthylamin gefördert werden.

Das Alkaliwasserglas, vorzugsweise Natrium- und/oder Kaliumwasserglas dient sowohl der Härtung des Zements als auch der Steuerung der Reaktionsrichtung. Merkliche Anteile des Zements reagieren dabei unter Bildung von gelartigen Verbindungen des Zeolith-Typus. Die Alkalisilikatkonzentration des Wasserglases liegt meist im Bereich von 20 - 60 Gew.-% bezogen auf das Gesamtgewicht von wässrigem Träger und Alkalisilikat. Die Werte sind nicht kritisch und verstehen sich als Feststoff-Gesamtgehalt und beinhalten sowohl untergeordnete Mengen an Hydrosolen sowie durch den Kohlendioxidgehalt der Luft verursachte, auch nicht mehr peptisierbare Kieselsäurepräzipitate. Einfacherweise sind die handelsüblichen ca. 30- bis 55-, sogar bis 80-Gew.-%igen Konzentrationen bevorzugt. Das Gewichtsverhältnis von dem im Wasserglas enthaltenen Wasser zu Zement liegt im allgemeinen im Bereich von 0,2 bis 2,5 , vorzugsweise von 0,3 bis 1,7.

Die erfindungsgemässen 2-Komponenten-Mörtelmassen können zusammen mit den härtbaren Bestandteilen und/oder den Härterbestandteilen übliche Füllmittel wie Quarz, Kreide, Kaolin, Korund, Keramik, Glas, anorganische oder organische Fasern sowie Verdicker, Lösungsmittel, Dispergiermittel, Thixotropiermittel, Stabilisatoren, Steuerungsmittel für die Härtungsgeschwindigkeit und/oder Netzmittel oder dergleichen auch an sich bekannte Zusätze enthalten. Vorzugsweise machen die härtbaren Bestandteile 10 - 85 Gew.-%, bezogen auf das Gewicht der härterfreien Gesamtmörtelmasse, aus.

Das Gewichtsverhältnis der härtbaren anorganischen Komponente zur härtbaren organischen Komponente kann in weiten Bereichen schwanken. Die Bindemittel bildenden härtbaren Komponenten, nämlich die anorganische Komponente aus Zement und Alkalisilikat (fest) und die organische Komponente aus Epoxid, Reaktiwerdünner und Amin sind in einem Gewichtsverhältnis von ≥ 0,5 : 1 enthalten. Vorzugsweise liegt das Gew.-Verhältnis von besagter anorganischer Komponente zu besagter organischer Komponente zwischen 1,0 und 5,0. Dabei ist es bei den erfindungsgemässen 2-Komponenten-Mörtelmassen bevorzugt, dass die härtbaren Bestandteile in der einen Komponente, die Härter in der anderen Komponente enthalten sind. Es hat sich als vorteilhaft erwiesen, wenn auch die die härtbaren Bestandteile enthaltende Komponente flüssige oder doch zumindest pastöse Konsistenz besitzt; wie dies beispielsweise bei bekannten Gemischen von härtbarem Harz mit Reaktivverdünner und Zement der Fall ist. Dabei können die rheologischen Eigenschaften durch Gehalte an pyrogenem Siliciumdioxid oder anderen Thixotropiermitteln gesteuert werden. Die Einstellung der halbflüssigen oder pastösen Konsistenz kann auch beeinflusst werden durch den Aggregatzustand des reaktiwerdünnerfreien Epoxids. z.B. durch Verwendung der von Hause aus flüssigen Bisphenol-A und -F-Diglycidylether. Die Wasserglas enthaltende Härterkomonente kann durch Verdickungsmittel, Thixotropiermittel oder andere viskositätssteuernde Zusätze in ihrer Rheologie so eingestellt werden, dass das Vermischen mit der flüssigen bzw. pastösen anderen Komponente und damit die Härtungsreaktion erleichtert wird. Härtbare Bestandteile und Härter können z.B. auch derart auf die beiden Komponenten aufgeteilt sein, dass die eine Komponente Zement und flüssiges Amin, die andere Komponente Wasser, Epoxid und gegebenenfalls Reaktiwerdünner enthält.

Besonders vorteilhaft sind 2-Komponenten-Mörtel, die Bestandteile enthalten, welche die Härtungsgeschwindigkeit des Zements steuern. Die erfindungsgemässen hochreaktiven Massen enthalten vorzugsweise die Härtung verzögernde Substanzen, wie beispielsweise Alkaliphosphate, vorzugsweise Trinatriumorthophosphat bzw. dessen Hydrat.

Gegenstand der Erfindung ist auch die Verwendung der erfindungsgemässen, voranstehend erörterten 2-Komponenten-Mörtelmasse mit Epoxid und feinteiligem Zement als härtbare Bestandteile und Amin und Alkaliwasserglas als Härter zur Befestigung von Verankerungsmitteln wie Ankerstangen und dergleichen in Bohrlöchern. Insbesondere betrifft die Erfindung auch die Konfektionierung der erfindungsgemässen 2-Komponenten-Mörtel in Zwei- und Mehrkammersystemen. Hierzu gehören insbesondere Patronen aus Glas, Kunststoff, Folie oder Keramik, in deren Innerem die härtbaren Bestandteile von dem jeweiligen Härter durch zerstörbare Wandungen voneinander getrennt angeordnet sind. Solche Patronensysteme werden in die Bohrlöcher eingesetzt, wobei zur Einleitung der Härtungsreaktion die Patronen einschliesslich der darin befindlichen Trennwandungen zerstört werden, beispielsweise unter Eintreiben der Ankerstange. Zu solchen Zwei- und Mehrkammersystemen gehören auch zwei oder mehr Folienbeutel zur Trennung von härtbaren Bestandteilen und Härtern, wobei der Inhalt der Folienbeutel gemeinsam, z.B. über einen Statikmischer, in ein Bohrloch injiziert werden kann. Diese Patronen- und Folienbeutel-Systeme enthalten in üblicher Weise neben den reaktionshindernd getrennten reaktiven Bestandteilen weitere Mörtelbestandteile wie Füllmittel, Lösungsmittel, Verdicker, Thixotropiermittel, härtungssteuernde Mittel und dergleichen.

Die nachfolgenden Beispiele dienen der Erläuterung der Erfindung.

### Beispiel:

| | | **Gew.-%** |
|---|---|---|
| A | Na-Wasserglas (GVZ = 2,7) | 19,7 |
| | Na-Phosphat-Verzögerer (wasserfrei) | 0,8 |
| | Polyamin-Härter | 1,9 |
| | Quarzsand (mittl. Korngrösse 0,24 mm) | 33,5 |
| | Quarzmehl (spez. Oberfläche ca. 0,9 m2/g BET) | 19,0 |
| B | Portlandzement (spez. Oberfläche ca. 4,4 m2/g BET) | 9,3 |
| | Polyepoxid | 2,9 |
| | Reaktiwerdünner | 2,9 |
| | Quarzsand (mittl. Korngrösse 0,24 mm) | 10,0 |

Die Komponenten A und B werden zur Härtung im Verhältnis 1 : 1 gemischt.

## Patentansprüche

1. Härtbare 2-Komponenten-Mörtelmasse mit härtbaren organischen und härtbaren anorganischen Bestandteilen und mit Härtern, wobei die Härter von dem jeweiligen härtbaren Bestandteil reaktionsinhibierend getrennt aber zur Anwendung bzw. Verwendung aktivierbar sind, **dadurch gekennzeichnet, dass** Epoxid und feinteiliger Zement als härtbare Bestandteile und Amin und Alkaliwasserglas als Härter enthalten sind, dass das Epoxid mindestens 1,5 Epoxid-Gruppen pro Molekül enthält und dass die die härtbaren Bestandteile enthaltende Komponente flüssige bis pastöse Konsistenz besitzt.

2. Mörtelmasse gemäss Patentanspruch 1, **dadurch gekennzeichnet, dass** ein Reaktionsverdünner für das Epoxid enthalten ist.

3. Mörtelmasse gemäss einem der vorhergehenden Patenansprüche, **dadurch gekennzeichnet, dass** Portlandzement und/oder Al-haltige Zemente wie Aluminatzement bzw. Tonerdeschmelzzement enthalten sind.

4. Mörtelmasse gemäss einem der vorhergehenden Patentansprüche, **dadurch gekennzeichnet, dass** der feinteilige Zement eine spezifische Oberfläche von 0,8 bis 7 m2/g, insbesondere 2 bis 6 m2/g (jeweils nach BET) aufweist.

5. Mörtelmasse gemäss einem der vorhergehenden Patentansprüche, **dadurch gekennzeichnet, dass** aliphatische und/oder araliphatische Amine, vorzugsweise Alkylenpolyamine und/oder Mannichbasen, enthalten sind.

6. Mörtelmasse gemäss einem der vorhergehenden Patentansprüche, **dadurch gekennzeichnet, dass** das Verhältnis der Zahl der Aminwasserstoffe zur Zahl der Epoxid-Gruppen 3:1 bis 0,8:1 beträgt.

7. Mörtelmasse gemäss einem der vorhergehenden Patentansprüche, **dadurch gekennzeichnet, dass** das Alkaliwasserglas Na- Wasserglas und/oder K-Wasserglas ist.

8. Mörtelmasse gemäss einem der vorhergehenden Patentansprüche, **dadurch gekennzeichnet, dass** die Alkalisilikat-Konzentration des Wasserglases 20-60 Gew.-%, bezogen auf das Gesamtgewicht von wässrigem Träger und Alkalisilikat, beträgt.

9. Mörtelmasse gemäss einem der vorhergehenden Patentansprüche, **dadurch gekennzeichnet, dass** das Gewichtsverhältnis von dem im Wasserglas enthaltenden Wasser zu Zement im Bereich von 0,2 bis 2,5 vorzugsweise von 0,2 bis 1,7 liegt.

10. Mörtelmasse gemäss einem der vorhergehenden Patentansprüche, **dadurch gekennzeichnet, dass** die härtbaren Bestandteile und/oder die Härter Füllmittel, Verdicker, Lösungsmittel, Dispergiermittel, Thixotropiermittel, Stabilisatoren, Steuerungsmittel für die Härtungsgeschwindigkeit und/oder Netzmittel enthalten.

11. Mörtelmasse gemäss einem der vorhergehenden Patentansprüche, **dadurch gekennzeichnet, dass** die härtbaren Bestandteile 10-85 Gew.-%, bezogen auf das Gesamtgewicht der härterfreien Gesamtmörtelmasse, ausmachen.

12. Mörtelmasse gemäss einem der vorhergehenden Patentansprüche, **dadurch gekennzeichnet, dass** das Gewichtsverhältnis der anorganisch härtbaren Komponente aus Zement und Alkalisilikat (trocken) zur organisch härtbaren Komponente aus Epoxid, Amin und Reaktiwerdünner, so vorhanden, ≥ 0,5:1 vorzugsweise 1 und 5 liegt.

13. Mörtelmasse gemäss einem der vorhergehenden Patentansprüche, **dadurch gekennzeichnet, dass** die härtbaren Bestandteile in der einen Komponente, die Härter in der anderen Komponente enthalten sind.

14. Mörtelmasse gemäss einem der vorhergehenden Patentansprüche, **dadurch gekennzeichnet, dass** die Zementhärtung steuernde, insbesondere härtungsverzögernde Substanzen enthalten sind.

15. Mörtelmasse gemäss einem der vorhergehenden Patentansprüche, **dadurch gekennzeichnet, dass** Alkaliphosphate, vorzugsweise Trinatriumorthophosphat, enthalten sind.

16. Mörtelmasse gemäss einem der vorhergehenden Patentansprüche, **dadurch gekennzeichnet, dass** das Gewichtsverhältnis von Epoxid zu Reaktivverdünner 1:99 bis 99:1 ist.

17. Verwendung der Mörtelmasse gemäss einem der vorhergehenden Patentansprüche zur Befestigung von Verankerungsmitteln in Bohrlöchern.

18. Verwendung der Mörtelmasse gemäss Patentanspruch 17 als Zwei- oder Mehrkammernsystem.

## Claims

1. Hardenable 2 component mortar mass with hardenable organic and hardenable inorganic components and with hardeners, in which the hardeners are separated from the relevant hardenable components, inhibiting reaction, but can be activated for application or use, **characterised in that** epoxide and fine particle cement are contained as hardenable components and amine and alkaline water glass as hardeners, that the epoxide contains at least 1.5 epoxide groups per molecule and that the components containing the hardenable components have a fluid to pasty consistency.

2. Mortar mass according to patent claim 1, **characterised in that** a reaction thinner for the epoxide is contained.

3. Mortar mass according to one of the previous patent claims, **characterised in that** Portland cement and/or cement containing aluminium such as aluminous cement or high alumina cement, are contained.

4. Mortar mass according to one of the previous patent claims, **characterised in that** the fine particle cement has a specific surface of 0.8 to 7 m2/g, particularly 2 to 6 mg2/g (according to BET).

5. Mortar mass according to one of the previous patent claims, **characterised in that** aliphatic and/or araliphatic amines, preferably alkylene polyamines and/or Mannich bases, are contained.

6. Mortar mass according to one of the previous patent claims, **characterised in that** the ratio of the number of amino hydrogens to the number of epoxide groups is 3:1 to 0.8:1.

7. Mortar mass according to one of the previous patent claims, **characterised in that** the alkaline water glass is Na water glass and/or K water glass.

8. Mortar mass according to one of the previous patent claims, **characterised in that** the alkali silicate concentration of the water glass is 20-60% by weight with reference to the total weight of the aqueous carrier and alkali silicate.

9. Mortar mass according to one of the previous patent claims, **characterised in that** the weight ratio of the water contained in the water glass to the cement is in the range of 0.2 to 2.5 preferably 0.2 to 1.7.

10. Mortar mass according to one of the previous patent claims, **characterised in that** the hardenable components and/or the hardeners contain fillers, thickeners, solvents, dispersants, thixotropic agents, stabilisers, means for controlling the hardening speed and/or wetting agents.

11. Mortar mass according to one of the previous patent claims, **characterised in that** the hardenable components make up 10-85% by weight with reference to the total weight of the total mortar mass without hardener.

12. Mortar mass according to one of the previous patent claims, **characterised in that** the weight ratio of the inorganic hardenable components made of cement and alkali silicate (dry) to the organic hardenable components made of epoxide, amine and reactive thinner, as available, is ≥ 0.5:1, preferably 1 and 5.

13. Mortar mass according to one of the previous patent claims, **characterised in that** the hardenable components are contained in one component and the hardeners in the other component.

14. Mortar mass according to one of the previous patent claims, **characterised in that** substances for controlling cement hardening, particularly for delaying hardening, are contained.

15. Mortar mass according to one of the previous patent claims, **characterised in that** alkaline phosphates, particularly trisodium orthophosphates, are contained.

16. Mortar mass according to one of the previous patent claims, **characterised in that** the weight ratio of epoxide to reactive thinner is 1:99 to 99:1.

17. Application of the mortar mass according to one of the previous patent claims for fastening means of anchoring in boreholes.

18. Application of the mortar mass according to patent claim 17 as a two or multiple chamber system.

## Revendications

1. Masse de mortier à 2 composants durcissable comprenant des éléments organiques durcissables et anorganiques durcissables et des durcisseurs, dans laquelle les durcisseurs sont dissociés des éléments durcissables respectifs de façon à inhiber la réaction mais peuvent être activés pour l'utilisation ou l'application, **caractérisée en ce qu'**elle comprend de l'époxyde et du ciment en fines particules comme élément durcissable et une amine et un silicate alcalin comme durcisseur, que l'époxyde contient au moins 1,5 pro-molécules du groupe époxyde et que les composants comprenant les éléments durcissables ont une consistance liquide à pâteuse.

2. Masse de mortier selon la revendication 1, **caractérisée en ce qu'**elle comprend un diluant de réactif pour l'époxyde.

3. Masse de mortier selon l'une quelconque des revendications précédentes, **caractérisée en ce qu'**elle comprend un portland et/ou un ciment contenant Al, tel qu'un ciment d'aluminate ou un élément de fusion d'alumine.

4. Masse de mortier selon l'une quelconque des revendications précédentes, **caractérisée en ce que** le ciment à particules fines présente une surface spécifique de 0,8 à 7 m²/g, en particulier de 2 à 6 m²/g (à chaque fois selon BET).

5. Masse de mortier selon l'une quelconque des revendications précédentes, **caractérisée en ce qu'**elle comprend des amines aliphatiques et/ou araliphatiques, de préférence des polyamines alkyles et/ou des bases de Mannich.

6. Masse de mortier selon l'une quelconque des revendications précédentes, **caractérisée en ce que** le rapport de la quantité d'hydrogène d'amine sur la quantité de groupes époxydes est compris entre 3:1 et 0,8:1.

7. Masse de mortier selon l'une quelconque des revendications précédentes, **caractérisée en ce que** le silicate alcalin est un silicate Na et/ou un silicate K.

8. Masse de mortier selon l'une quelconque des revendications précédentes, **caractérisée en ce que** la concentration en silicate alcalin du silicate est compris entre 20 et 60 % en poids, rapportée au poids total du support aqueux et du silicate alcalin.

9. Masse de mortier selon l'une quelconque des revendications précédentes, **caractérisée en ce que** le rapport de poids de l'eau contenant le silicate sur le ciment est dans la plage de 0,2 à 2,5, de préférence de 0,2 à 1,7.

10. Masse de mortier selon l'une quelconque des revendications précédentes, **caractérisée en .ce que** l'élément durcissable et/ou les durcisseurs contiennent une charge, un épaississant, un solvant, un agent dispersant, un agent thixotrope, un stabilisateur, un agent de contrôle de la vitesse de durcissement et/ou un agent de réticulation.

11. Masse de mortier selon l'une quelconque des revendications précédentes, **caractérisée en ce que** les éléments durcissables représentent 10-85 % en poids sur, le poids total de l'ensemble de la masse de mortier sans durcissant.

12. Masse de mortier selon l'une quelconque des revendications précédentes, **caractérisée en ce que** le rapport de poids des composants durcissables anorganiques du ciment et de silicate alcalin (secs) sur le composant durcissable organique de l'époxyde, de l'amine et du diluant de réactif est supérieur ou égal à 0,5:1, de préférence 1 et 5.

13. Masse de mortier selon l'une quelconque des revendications précédentes, **caractérisée en ce que** les éléments durcissables sont compris dans l'un des composants, et les durcisseurs dans l'autre composant.

14. Masse de mortier selon l'une quelconque des revendications précédentes, **caractérisée en ce qu'**elle comprend des substances contrôlant le durcissement du ciment, en particulier retardant le durcissement.

15. Masse de mortier selon l'une quelconque des revendications précédentes, **caractérisée en ce qu'**elle comprend un phosphate alcalin, de préférence du phosphate de trisodium.

16. Masse de mortier selon l'une quelconque des revendications précédentes, **caractérisée en ce que** le rapport de poids de l'époxyde sur le diluant de réactif est compris entre 1:99 et 99:1.

17. Utilisation d'une masse de mortier selon l'une quelconque des revendications précédentes pour la fixation d'un dispositif d'ancrage dans des trous forés.

18. Utilisation d'une masse de mortier selon la revendication 17 comme système à deux chambres ou plus.
